# EUROPÄISCHE PATENTSCHRIFT

(11) **EP 3 863 886 B1**
(45) Veröffentlichungstag und Bekanntmachung des Hinweises auf die Patenterteilung: **07.06.2023**
(21) Anmeldenummer: 19711310.3
(22) Anmeldetag: 13.03.2019
(51) Int. Cl.: B60N 2/225, B60N 2/30, B60N 2/36

(54) **FAHRZEUGSITZ MIT TAUMELND GELAGERTEM LEHNENELEMENT**
VEHICLE SEAT WITH EXCENTICALLY MOUNTED BACKREST ELEMENT
SIÈGE DE VÉHICULE AVEC ÉLÉMENT DE DOSSIER MONTÉ EXCENTRIQUE

(30) Priorität: 10.10.2018 DE 102018217343
(43) Veröffentlichungstag der Anmeldung: 18.08.2021
(73) Patentinhaber: Brose Fahrzeugteile SE & Co. Kommanditgesellschaft, Coburg, 96450 Coburg (DE)
(72) Erfinder: GOLLHARDT, Markus, 96126 Ermershausen (DE); MÖLLER, Denny, 96486 Lautertal (DE); PAULS, Andreas, Grub am Forst 96271 (DE)
(74) Vertreter: Maikowski & Ninnemann Patentanwälte Partnerschaft mbB
(86) Internationale Anmeldenummer: PCT/EP2019/056239
(87) Internationale Veröffentlichungsnummer: WO 2020/074129

(56) Entgegenhaltungen:
- DE-B3-102012 024 643
- US-A1- 2016 339 810

## Beschreibung

Die vorgeschlagene Lösung betrifft einen Fahrzeugsitz mit einem Sitzunterbau, an dem eine Rückenlehne schwenkbar gelagert ist, und mit einem Lehnenelement, das wahlweise zusammen mit der Rückenlehne oder relativ hierzu schwenkbar ist.

Derartige Fahrzeugsitze sind in der DE 10 2012 024643 B3 und der US 2016/339810 A1 beschrieben.

Fahrzeugsitze, die neben einer Rückenlehne ein zusätzliches Lehnenelement aufweisen, das wahlweise zusammen mit der Rückenlehne oder relativ hierzu schwenkbar ist, sind weithin bekannt. Bei einem solchen Lehnenelement handelt es sich beispielsweise um eine sogenannte Durchlade an einem Fahrzeugsitz für die zweite oder dritte Sitzreihe in einem Kraftfahrzeug. Die Durchlade ist hierbei, gegebenenfalls nach lösen einer entsprechenden Verriegelung, unabhängig von der Rückenlehne und relativ zu der Rückenlehne schwenkbar und mithin klappbar, zum Beispiel um eine Öffnung freizugeben. Gleichzeitig soll aber die Durchlade auch zusammen mit der Rückenlehne schwenkbar und mithin klappbar sein, um zum Beispiel eine durchgängige Ladefläche aus Rückenlehne und Durchlade in einer vorgeklappten Position bilden zu können.

Häufig ist die Durchlade oder ein anderes vergleichbares Lehnenelement an der Rückenlehne selbst schwenkbar gelagert. Eine Schwenkachse für das Lehnenelement ist somit beispielsweise durch zwei rückenlehnenfeste Drehlager vorgegeben. Eine Schwenkachse für das Lehnenelement und eine Lehnenschwenkachse für die Rückenlehne verlaufen somit beispielsweise parallel zueinander, nicht aber koaxial. Das Lehnenelement ist damit stets Teil der Rückenlehne und nicht eine hiervon unabhängige Komponente.

Eine alternative Ausführungsvariante sieht vor, dass das Lehnenelement selbst an dem Sitzunterbau schwenkbar gelagert wird. Für die Rückenlehne einerseits und das Lehnenelement andererseits sind somit eigene Drehlager am Sitzunterbau vorgesehen. Hierbei ist unter Umständen aber nachteilig, dass für das zusätzliche Lehnenelement ebenfalls Beschlaganordnungen zur crashsicheren Lagerung an dem Sitzunterbau vorgesehen werden müssen. Derartige Beschlaganordnungen sind jedoch vergleichsweise teuer und beanspruchen auch zusätzlichen Bauraum.

Wird das zusätzliche Lehnenelement demgegenüber ohne zusätzliche Beschlaganordnung an dem Sitzunterbau gelagert, besteht wiederum das Problem, dass zum Beispiel bei einer Lagerung der Rückenlehne über eine Drehbeschlaganordnung eine Schwenkbewegung der Rückenlehne bezüglich des Sitzunterbaus um eine eine Taumelbewegung ausführende Lehnenschwenkachse erfolgt. Eine solche Taumelbewegung führt in der Praxis regelmäßig zu einem Wandern der Lehnenschwenkachse um nur wenige Millimeter. Führt jedoch ein mit der Rückenlehne verbundenes Lehnenelement eine solche Taumelbewegung nicht ebenfalls vollständig aus, sondern führt eine eigenständige, nicht taumelnde Schwenkbewegung aus, kommt es zu einem sichtbaren und sich bei der Schwenkbewegung verändernden Versatz zwischen Rückenlehne und Lehnenelement.

Es ist daher eine Aufgabe der vorgeschlagenen Lösung, einen in dieser Hinsicht verbesserten Fahrzeugsitz bereitzustellen.

Diese Aufgabe ist mit einem Fahrzeugsitz des Anspruchs 1 gelöst.

Hiernach ist vorgesehen, dass das zusätzliche Lehnenelement, das zusammen mit der Rückenlehne, aber auch relativ zu der Rückenlehne schwenkbar ist, an einer ersten Lagerstelle an dem Sitzunterbau gelagert ist und an einer zweiten Lagerstelle an der Rückenlehne gelagert ist. An der ersten Lagerstelle ist für die Lagerung des Lehnenelements ein erstes bei einer Schwenkbewegung der Rückenlehne eine Taumelbewegung der Lehnenschwenkachse nachvollziehendes Verbindungselement vorgesehen. An der zweiten Lagerstelle ist für die Lagerung des Lehnenelements ein zweites bei einer Schwenkbewegung der Rückenlehne eine Taumelbewegung der Lehnenschwenkachse nachvollziehendes Verbindungselement vorgesehen. Mit anderen Worten kann demnach das zusätzliche Lehnenelement über die ersten und zweiten Verbindungselemente sowohl an einer ersten Lagerstelle am Sitzunterbau als auch an einer zweiten Lagerstelle an der Rückenlehne taumelnd gelagert sein.

Über die die Taumelbewegung nachvollziehenden Verbindungselemente kann somit das zusätzliche Lehnenelement an seinen Lagerstellen im Gleichlauf mit der Rückenlehne geschwenkt werden. Beispielsweise ist hierfür das erste oder zweite Verbindungselement gegebenenfalls selbst taumelnd gelagert, um die Taumelbewegung der Rückenlehne nachzuvollziehen, wenn die Rückenlehne und das Lehnenelement gemeinsam relativ zu dem Sitzunterbau geschwenkt werden. Grundsätzlich kann das erste oder zweite Verbindungselement drehfest mit der Rückenlehne gekoppelt sein, sodass das jeweilige Verbindungselement eine mit der Schwenkbewegung der Rückenlehne synchrone, taumelnde Bewegung ausführt, wenn die Rückenlehne geschwenkt wird. Um eine Schwenkbarkeit des Lehnenelements relativ zu der Rückenlehne zu ermöglichen, kann das Lehnenelement an dem das jeweilige Verbindungselement relativ zu der Rückenlehne schwenkbar gehalten sein.

Grundsätzlich kann das Lehnenelement an einer ersten Lagerstelle, an der das Lehnenelement an dem Sitzunterbau gelagert ist, beschlagsfrei gelagert sein. Mit anderen Worten erfolgt hierbei eine Lagerung des Lehnenelements ohne eine Beschlaganordnung, und damit z.B. ohne einen Dreh- oder Rastbeschlag. Die Rückenlehne wiederum ist über mindestens eine Beschlaganordnung an dem Sitzunterbau schwenkbar gelagert. In einer Ausführungsvariante ist für die schwenkbare Lagerung der Rückenlehne an dem Sitzunterbau wenigstens ein Drehbeschlag vorgesehen. In einer Ausführungsvariante ist die Rückenlehne ferner über zwei Drehbeschläge schwenkbar gelagert, die unterschiedlichen Längsseiten der Rückenlehne zugeordnet sind.

Erfindungsgemäß ist das erste Verbindungselement an einer sitzunterbaufesten Komponente (an der ersten Lagerstelle) exzentrisch gelagert und ist das zweite Verbindungselement (an der zweiten Lagerstelle) drehfest mit der Rückenlehne gekoppelt.

So ist das Lehnenelement an der ersten Lagerstelle beschlagsfrei an dem Sitzunterbau über das erste, die Taumelbewegung nachvollziehende Verbindungselement gelagert. Ferner ist das Lehnenelement an der zweiten Lagerstelle über das zweite, die Taumelbewegung nachvollziehende Verbindungselement gelagert. Es sind folglich zwei entsprechende (erste und zweite) Verbindungselemente vorgesehen, von denen ein erstes Verbindungselement an einer sitzunterbaufesten Komponente exzentrisch gelagert ist und das andere, zweite Verbindungselement drehfest mit der Rückenlehne gekoppelt ist.

In einem Ausführungsbeispiel ist das Lehnenelement an der ersten Lagerstelle über das erste Verbindungselement an der sitzunterbaufesten Komponente exzentrisch gelagert, um die Taumelbewegung der Rückenlehne an der ersten Lagerstelle nachzuvollziehen, wenn das Lehnenelement gemeinsam mit der Rückenlehne relativ zu dem Sitzunterbau geschwenkt wird. Ferner ist das Lehnenelement relativ zu dem (dann gegebenenfalls feststehenden) ersten Verbindungselement schwenkbar, wenn das Lehnenelement relativ zu der Rückenlehne geschwenkt wird.

Alternativ oder ergänzend kann vorgesehen sein, dass das Lehnenelement an der zweiten Lagerstelle über das zusätzliche zweite Verbindungselement mit der mindestens einen Beschlaganordnung der Rückenlehne gekoppelt ist, um die Taumelbewegung der Rückenlehne an der zweiten Lagerstelle nachzuvollziehen, wenn das Lehnenelement gemeinsam mit der Rückenlehne relativ zu dem Sitzunterbau geschwenkt wird. Ferner kann auch hier das Lehnenelement relativ zu dem (dann gegebenenfalls feststehenden) zweiten Verbindungselement schwenkbar sein, wenn das Lehnenelement relativ zu der (feststehenden) Rückenlehne geschwenkt wird.

Bei den vorstehend erläuterten Ausführungsvarianten ist somit vorgesehen, dass das zusätzliche Lehnenelement über das jeweilige Verbindungselement einerseits zusammen mit der Rückenlehne taumelnd schwenkbar ist und andererseits an diesem Verbindungselement selbst schwenkbar gehalten ist, um das Lehnenelement relativ zu der Rückenlehne schwenken zu können. Über das mindestens eine bei einer Schwenkbewegung der Rückenlehne die Taumelbewegung der Lehnenschwenkachse nachvollziehende Verbindungselement lässt sich somit in besonders einfacher Weise der Grundgedanke der vorgeschlagenen Lösung verwirklichen. Dieser Grundgedanke zielt darauf, das zusätzliche Lehnenelement zwar eigenständig zu lagern und damit unabhängig von der Rückenlehne schwenken zu können, gleichzeitig aber auch bei einer taumelnden Schwenkbewegung der Rückenlehne das Lehnenelement synchron mit zu verstellen und hierbei die gleiche Bewegung ausführen zu lassen, ohne dass hierfür ein zusätzlicher Beschlag benötigt wird.

Ein Verbindungselement kann grundsätzlich jeweils eine Schwenkachse definieren, um die das Lehnenelement relativ zu der Rückenlehne schwenkbar ist. Hierbei kann die von dem jeweiligen Verbindungselement definierte Schwenkachse koaxial zu der Lehnenschwenkachse verlaufen.

In einer Ausführungsvariante ist vorgesehen, dass das erste Verbindungselement über einen ersten Lagerabschnitt die Schwenkachse für das Lehnenelement definiert und über einen zweiten Lagerabschnitt an der sitzunterbaufesten Komponente exzentrisch gelagert ist. Es wird mithin zum Beispiel ein gestuftes Verbindungselement bereitgestellt, bei dem erste und zweite, z.B. kreiszylindrische, Lagerabschnitte unterschiedliche Durchmesser aufweisen. Somit kann beispielsweise an einem ersten Absatz des ersten Verbindungselements der erste Lagerabschnitt für die Schwenkachse des Lehnenelements definiert sein und über einen zweiten Absatz - mit dann zum Beispiel kleinerem Durchmesser - die exzentrische Lagerung des Verbindungselements an der sitzunterbaufesten Komponente realisiert sein.

In einer Ausführungsvariante ist ein Verbindungselement drehfest mit einer Verbindungswelle verbunden, die bei einer Schwenkbewegung der Rückenlehne um ihre Wellenlängsachse gedreht wird. Über diese Verbindungswelle ist beispielsweise die Taumelbewegung der Rückenlehne an das Verbindungselement übertragbar. Beispielsweise ist die Rückenlehne über zwei räumlich zueinander beabstandete und hierbei jeweils einer Lehnenlängsseite zugeordnete Beschlaganordnungen an dem Sitzunterbau schwenkbar gelagert, wobei die Verbindungswelle die beiden Beschlaganordnungen drehmomentübertragend miteinander koppelt. Die Verbindungswelle kann somit insbesondere dazu dienen, ein Drehmoment von einer Lehnenlängsseite an den Beschlag der anderen Lehnenlängsseite zu übertragen, um beide Lehnenlängsseiten der Rückenlehne synchron miteinander zu verstellen. Eine solche Verbindungswelle kann dann in der vorstehend erläuterten Ausführungsvariante auch dazu genutzt sein, ein oder mehrere Verbindungselemente des zusätzlich vorgesehenen Lehnenelements anzutreiben.

Beispielsweise erstreckt sich die Verbindungswelle durch eine Beschlaganordnung hindurch in Richtung der ersten Lagerstelle, an der das Lehnenelement an dem Sitzunterbau gelagert ist. Insbesondere kann sich die Verbindungswelle durch diese Beschlaganordnung hindurch zu der ersten Lagerstelle erstrecken. Die Verbindungswelle verläuft dann derart beispielsweise von der zweiten Lagerstelle, an der das Lehnenelement an der Rückenlehne und mithin im Bereich der Beschlaganordnung gelagert ist, zu der ersten Lagerstelle, an der das Lehnenelement beschlagsfrei an dem Sitzunterbau gelagert ist.

In einer Ausführungsvariante, in der eines des Verbindungselemente mit der mindestens einen Beschlaganordnung der Rückenlehne gekoppelt ist, kann sich durch das drehfest mit der Rückenlehne gekoppelte zweite Verbindungselement die Verbindungswelle hindurch erstrecken, ohne dass das zweite Verbindungselement mit der Verbindungswelle drehfest verbunden wäre. Hier bildet beispielsweise das zweite Verbindungselement einen hülsenförmigen Abschnitt aus, durch den sich die Verbindungswelle hindurch, beispielsweise in Richtung der ersten Lagerstelle, erstreckt.

Grundsätzlich kann vorgesehen sein, dass durch den Sitzunterbau eine Lagerachse definiert ist, relativ zu der die Lehnenschwenkachse eine Taumelbewegung ausführt, wenn die Rückenlehne geschwenkt wird. Der Sitzunterbau definiert folglich eine feststehende Lagerachse, relativ zu der die Lehnenschwenkachse für eine Schwenkbewegung der Rückenlehne taumelt, beispielsweise indem für die schwenkbare Lagerung der Rückenlehne an dem Sitzunterbau mindestens ein Drehbeschlaganordnung vorgesehen ist.

Das Lehnenelement, das einerseits zusammen mit der Rückenlehne schwenkbar sein soll und andererseits auch relativ zu der Rückenlehne schwenkbar sein soll, kann beispielsweise eine Durchlade umfassen.

Im Rahmen der vorgeschlagenen Lösung kann die Rückenlehne (mit dem Lehnenelement) manuell und/oder fremdkraftbetätigt verstellbar sein. So ist die vorgeschlagene Lösung nicht auf ein bestimmtes Antriebskonzept beschränkt. Insbesondere kann die vorgeschlagene Lösung sowohl bei einer manuell verstellbaren als auch bei einer elektromotorisch verstellbaren Rückenlehne zum Einsatz kommen.

In einer Ausführungsvariante ist die Rückenlehne über zwei identisch ausgebildete, aber nicht um 180° zueinander gedreht angeordnete Beschlaganordnung an dem Sitzunterbau schwenkbar gelagert. Insbesondere in Kombination mit einem zusätzlichen Lehnenelement, das an dem Fahrzeugsitz vorgesehen ist, ermöglicht eine derartige Nutzung identisch ausgebildeter, aber nicht um 180° zueinander gedreht (und damit gleich ausgerichtet) montierter Beschlaganordnung eine einfache Montage und Lagerung. So hat sich gezeigt, dass hierdurch zum Beispiel die Verwendung zusätzlicher Abstützteile im Bereich des Lehnenelements für die Anbindung im Bereich einer der Beschlaganordnungen entfallen kann. Bezogen auf eine erste Beschlaganordnung ist dann folglich die zweite Beschlaganordnung an der anderen Lehnenlängsseite der Rückenlehne - entgegen der in der Praxis üblichen Anordnung - in identischer Ausrichtung vorgesehen.

Alternativ oder ergänzend kann die Rückenlehne über zwei Beschlaganordnungen an dem Sitzunterbau schwenkbar gelagert sein, von denen a) eine erste Beschlaganordnung außenseitig mit einem ersten rückenlehnenseitigen Lehnenadapter und innenseitig mit einem ersten sitzunterbauseitigen Lagerteil verbunden ist und b) eine zweite Beschlaganordnung außenseitig mit einem zweiten sitzunterbauseitigen Lagerteil und innenseitig mit einem zweiten rückenlehnenseitigen Lehnenadapter verbunden ist. Während somit an der einen Lehnenlängsseite im Bereich der ersten Beschlaganordnung der (erste) sitzunterbauseitige Lagerteil, zum Beispiel in Form eines Sitzadapters, innen und der (erste) Lehnenadapter außen liegen, liegen an der anderen Lehnenlängsseite im Bereich der zweiten Beschlaganordnung der (zweite) Lehnenadapter innen und das (zweite) sitzunterbauseitige Lagerteil außen. Entlang einer Erstreckungsrichtung der Lehnenschwenkachse betrachtet, folgen somit ein erster Lehnenadapter, ein erstes Lagerteil, ein zweiter Lehnenadapter und ein zweites Lagerteil aufeinander.

Die wechselseitige Anordnung von rückenlehnenseitigen Lehnenadaptern und sitzunterbauseitigen Lagerteilen kann hierbei insbesondere auch durch zwei identisch ausgebildete, aber nicht um 180° zueinander gedreht angeordnete Beschlaganordnungen realisiert sein. Grundsätzlich sind hierfür aber identisch ausgebildete Beschlaganordnungen nicht zwingend.

Grundsätzlich können die beiden vorgenannten Aspekte, die die Verwendung identisch ausgebildeter, aber nicht um 180° zueinander gedreht angeordneter Beschlaganordnungen einerseits und die je nach Lehnenlängsseite unterschiedliche Anordnung von Lehnenadaptern und Lagerteilen bezüglich einer Beschlaganordnung andererseits betreffen, auch unabhängig von der vorgeschlagenen Verwendung eines die Taumelbewegung nachvollziehenden Verbindungselements an einem Fahrzeugsitz vorgesehen werden. In diesem Zusammenhang ist ferner auch nicht zwingend, dass der Fahrzeugsitz ein Lehnenelement umfasst, das zusammen mit der Rückenlehne schwenkbar ist und das relativ zu der Rückenlehne schwenkbar ist.

Die beigefügten Figuren veranschaulichen exemplarisch mögliche Ausführungsvarianten der vorgeschlagenen Lösung.

Hierbei zeigen:
- Figur 1: in Vorderansicht und ausschnittsweise eine Ausführungsvariante eines vorgeschlagenen Fahrzeugsitzes mit einer über zwei Drehbeschläge schwenkbare und an einem Sitzunterbau gelagerten Rückenlehne sowie mit einem Lehnenelement in Form einer Durchlade, die einerseits an dem Sitzunterbau und andererseits im Bereich eines Beschlags an der Rückenlehne schwenkbar gelagert ist;
- Figur 2: ausschnittsweise und in vergrößertem Maßstab den Fahrzeugsitz der Figur 1 mit Blick auf eine Verbindungswelle im Bereich der Durchlade, über die die zwei Drehbeschläge der Rückenlehne drehmomentübertragend miteinander gekoppelt sind und die sich bis zu der sitzunterbauseitigen Lagerstelle der Durchlade erstreckt;
- Figur 3: eine Explosionsdarstellung der Durchlade im Bereich ihrer sitzunterbauseitigen ersten Lagerstelle;
- Figur 4: ausschnittsweise den Fahrzeugsitz in perspektivischer Ansicht mit Blick auf die lehnenseitige zweite Lagerstelle der Durchlade im Bereich eines der Drehbeschläge;
- Figur 4A: vergrößerte und geschnittene Darstellung des Drehbeschlags entsprechend des in der Figur 4 hervorgehobenen Ausschnitts;
- Figur 5: in mit der Figur 4 übereinstimmender Ansicht den Fahrzeugsitz mit der Rückenlehne und der Durchlade in einer gegenüber den Figuren 4 und 4A vorgeschwenkten Stellung;
- Figur 5A: in mit der Figur 4A übereinstimmender geschnittener Darstellung des in der Figur 5 hervorgehobenen Ausschnitts den Drehbeschlag für die in der Figur 5 dargestellte vorgeschwenkte Stellung der Rückenlehne und der Durchlade;
- Figur 6: in mit den Figuren 4 und 5 übereinstimmender Ansicht den Fahrzeugsitz nochmals in einer Ruhelage entsprechend der Figuren 4 und 4A;
- Figur 6A: in vergrößertem Maßstab entsprechend dem Ausschnitt der Figur 6 die lehnenseitige zweite Lagerstelle der Durchlade;
- Figur 7: in mit der Figur 6 übereinstimmender Ansicht den Fahrzeugsitz mit nach vorne geschwenkter Rückenlehne und Durchlade;
- Figur 7A: in mit der Figur 6A übereinstimmender Ansicht die lehnenseitige zweite Lagerstelle der Durchlade für die vorgeschwenkte Stellung entsprechend der Figur 7;
- Figuren 8A-8B: Explosionsdarstellungen der sitzunterbauseitigen ersten Lagerstelle der Durchlade unter Verdeutlichung der bezüglich einer feststehenden Lagerachse taumelnden Lehnenschwenkachse für die Ruhelage der Figuren 4, 4A, 6 und 6A (Figur 8A) sowie die vorgeschwenkte Stellung den Figuren 5, 5A, 7 und 7A (Figur 8B);
- Figuren 9A-9C: in Vorderansicht Ausführungsvarianten eines vorgeschlagenen Fahrzeugsitzes mit schematischen Darstellungen der ersten und zweiten Lagerstellen der Durchlade, an denen die Durchlade taumelnd oder nicht taumelnd gelagert ist;
- Figur 10: ausschnittsweise den Fahrzeugsitz in perspektivischer Ansicht mit Blick auf die schwenkbare Lagerung der Rückenlehne an dem Sitzunterbau über zwei nicht um 180° zueinander gedreht angeordnete Drehbeschläge.

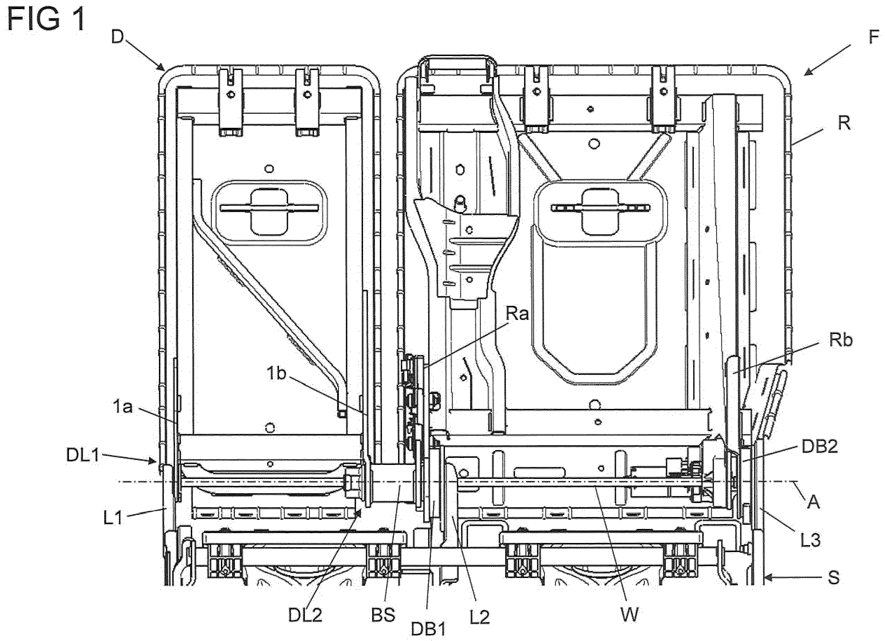

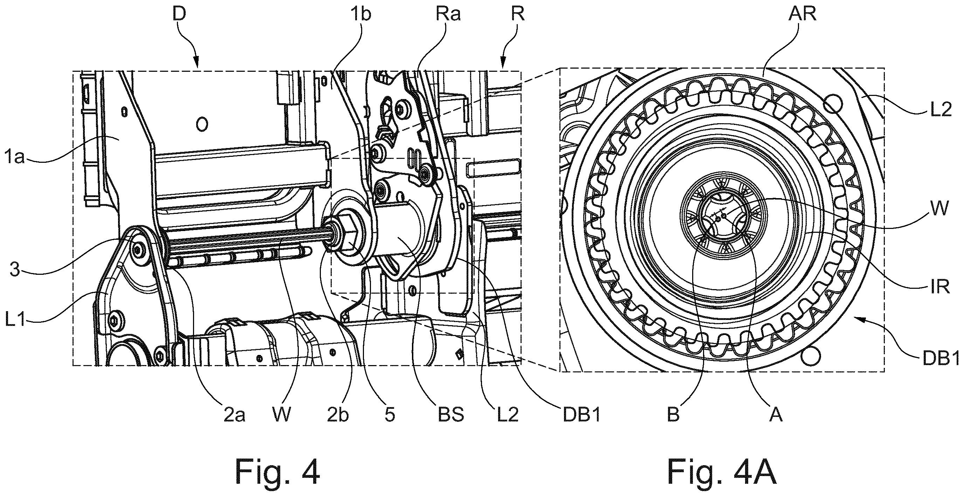

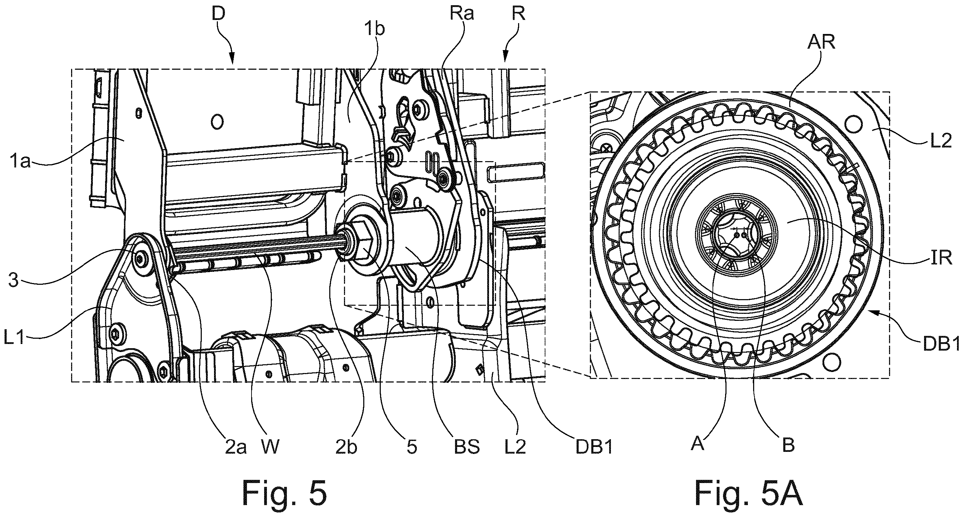

Die Figuren 1 bis 8B zeigen in der Zusammenschau eine Ausführungsvariante eines vorgeschlagenen Fahrzeugsitzes F. Dieser Fahrzeugsitz F weist einen Sitzunterbau S auf, an dem eine Rückenlehne R über zwei Drehbeschläge DB1 und DB2 um eine Lehnenschwenkachse A schwenkbar gelagert ist. Die Drehbeschläge DB1 und DB2 sind dabei an sitzunterbaufesten Lagerteilen L2 und L3 vorgesehen. Ein erstes Drehbeschlagteil ist hierbei dann jeweils einem Lagerteil L2 oder L3 zugeordnet und ein anderes, zweites Drehbeschlagteil ist einem rückenlehnenfesten Lehnenadapter Ra oder Rb zugeordnet, sodass durch Drehung der ersten und zweiten Drehbeschlagteile relativ zueinander die Rückenlehne R relativ zu dem Sitzunterbau S geschwenkt werden kann. Jeder der Drehbeschläge DB1 und DB2 umfasst hierbei zum Beispiel ein lagerteilseitiges, außenverzahntes Innenrad IR und ein lehnenseitiges, innenverzahntes Außenrad AR (vergleiche insbesondere Figuren 4A und 5A). Für eine Schwenkbewegung der Rückenlehne relativ zu dem Sitzunterbau S rollt das Außenrad AR über seine Innenverzahnung an der Außenverzahnung des Innenrades IR taumelnd ab. Die Lehnenschwenkachse A der Rückenlehne R führt somit eine Taumelbewegung bezüglich einer sitzunterbaufesten Lagerachse B aus. Die Relativbewegung der Lehnenschwenkachse A zu der sitzunterbauteilfesten Lagerachse B beträgt hierbei lediglich wenige Millimeter, zum Beispiel weniger als 4 mm.

An dem Fahrzeugsitz F ist ferner ein zusätzliches Lehnenelement in Form einer Durchlade D schwenkbar vorgesehen. Diese Durchlade D ist einerseits zusammen mit der Rückenlehne R schwenkbar und andererseits relativ hierzu. In Anbetracht der Taumelbewegung der Lehnenschwenkachse A der Rückenlehne R ist die Durchlade D einerseits taumelnd an einer sitzunterbauseitigen ersten Lagerstelle DL1 und andererseits an einer rückenlehnenseitigen zweiten Lagerstelle DL2 gelagert. Hierbei ist die Lagerung an beiden ersten und zweiten Lagerstellen DL1 und DL 2 derart, dass die Durchlade D einerseits die Taumelbewegung der Rückenlehne R nachvollziehen kann und damit eine identische Verlagerungsbewegung ausführt, wenn die Rückenlehne R geschwenkt wird, die Durchlade D aber darüber hinaus auch unabhängig von der Rückenlehne R und relativ hierzu geschwenkt werden kann, und zwar vorliegend um die Lehnenschwenkachse Ader Rückenlehne R.

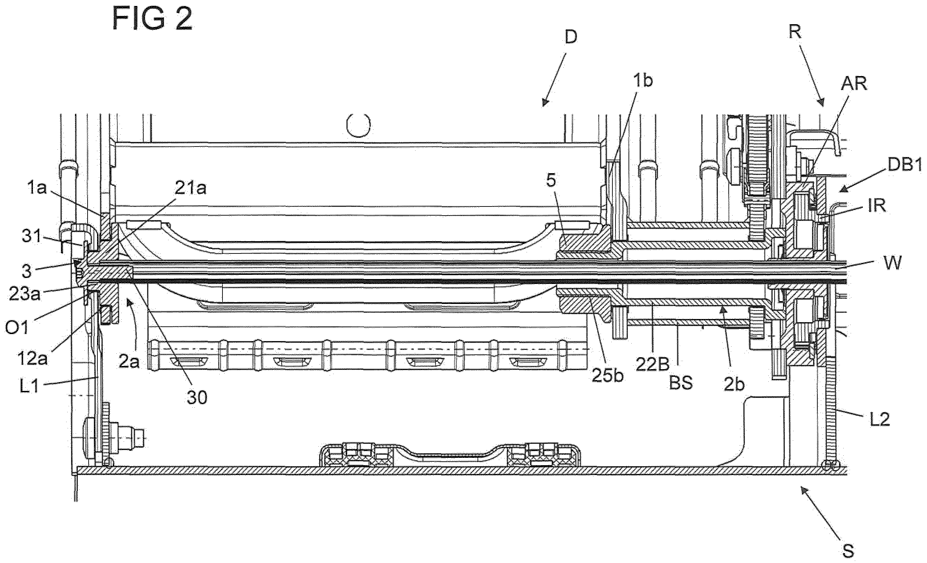

Die Lagerung der Durchlade D an dem Sitzunterbau S an der ersten Lagerstelle DL1 erfolgt an einem Lagerteil L1 des Sitzunterbaus S. An diesem Lagerteil L1 ist eine Durchgangsöffnung O1 ausgeformt. In dieser Durchgangsöffnung O1 ist ein buchsenförmiges Verbindungselement 2a exzentrisch gelagert. Hierfür ist ein kreiszylindrischer (zweiter) Lagerabschnitt 23a des Verbindungselements 2a in der Lageröffnung O1 des sitzunterbaufesten Lagerteils L1 aufgenommen (vergleiche hierzu insbesondere die Figuren 2, 3 und 8A bis 8B).

Das Verbindungselement 2a weist mittig eine Wellenöffnung 20a auf, in der ein Abschnitt einer Verbindungswelle W formschlüssig aufgenommen ist, sodass das Verbindungselement 2a und die Verbindungswelle W drehfest miteinander verbunden sind. Die Verbindungswelle W verbindet hierbei die beiden Drehbeschläge DB1 und DB2 der Rückenlehne R drehmomentübertragend miteinander und erstreckt sich durch den einen Drehbeschlag DB1 hindurch, der an der der Durchlade D zugewandten Lehnenlängsseite der Rückenlehne R vorgesehen ist. Die Verbindungswelle W erstreckt sich entlang der Lehnenschwenkachse A und vollzieht aufgrund der Kopplung mit den Drehbeschlägen DB1 und DB2 die Taumelbewegung der Rückenlehne R mit, wenn die Rückenlehne R mithilfe der Drehbeschläge DB1 und DB2 relativ zu dem Sitzunterbau S geschwenkt wird. Aufgrund seiner drehfesten Verbindung mit der Verbindungswelle W wird die Taumelbewegung auch an das Verbindungselement 2a übertragen, dass aufgrund seiner exzentrischen Lagerung in der Lageröffnung O1 des Lagerteils L1 des Sitzunterbaus S diese Taumelbewegung nachvollziehen kann.

Indem an einem weiteren (ersten) Lagerabschnitt 21a des Verbindungselements 2a ein Adapterteil in Form eines Adapterblechs 1a der Durchlade D gehalten ist und das Verbindungselement 2a über seinen (zweiten) Lagerabschnitt 23a exzentrisch in der Durchgangsöffnung O1 des sitzunterbaufesten Lagerteils L1 gelagert ist, kann die Durchlade D bei einer Schwenkbewegung der Rückenlehne R die Taumelbewegung an ihrer ersten sitzunterbauseitigen Lagerstelle DL1 nachvollziehen. Die Durchlade D ist folglich an ihrer sitzunterbauseitigen ersten Lagerstelle DL1 über das Verbindungselement 2a taumelnd an dem Lagerteil L1 des Sitzunterbaus S gelagert.

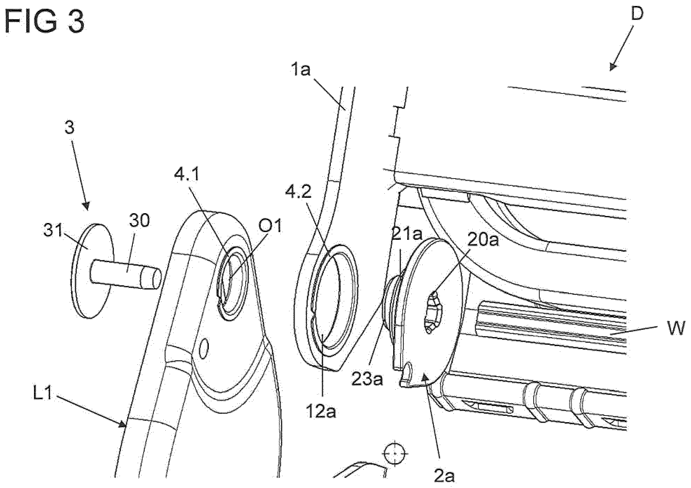

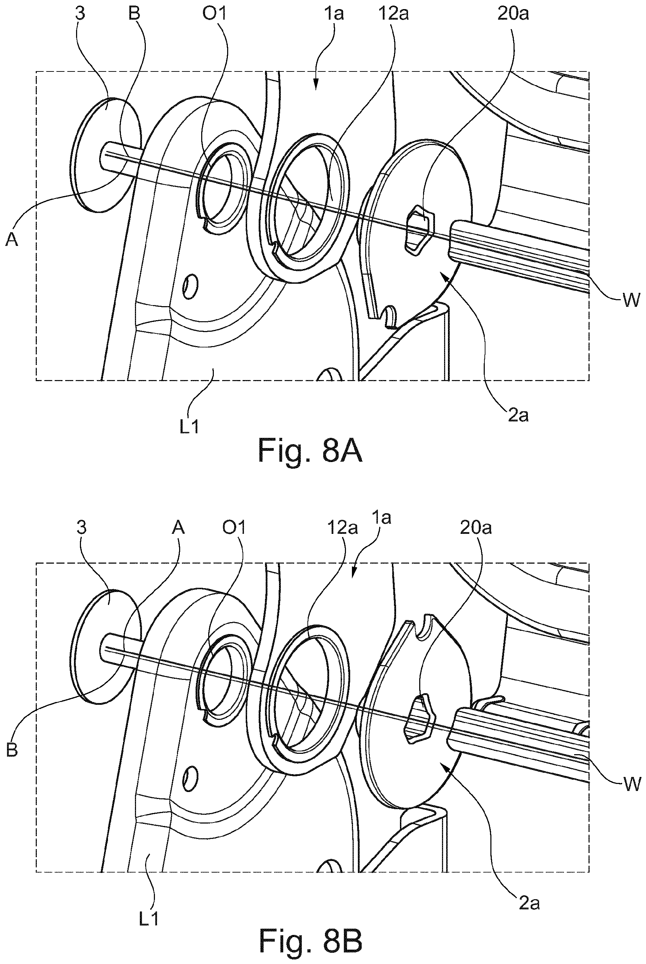

Gleichzeitig ist die Durchlade D an dem ersten Lagerabschnitt 21a des Verbindungselements 2a schwenkbar gehalten. Hierfür bildet das Adapterblech 1a der Durchlade D eine Lageröffnung 12a auf, in der der erste Lagerabschnitt 21a des Verbindungselements 2a aufgenommen ist. Zur reibungsarmen Lagerung des durchladeseitigen Adapterblechs 1a an dem ersten Lagerabschnitt 21a des Verbindungselements 2a ist eine Lagerbuchse 4.2 vorgesehen, die in die Lageröffnung 12a eingesetzt ist. Eine solche Lagerbuchse 4.2 kann beispielsweise aus Stahl oder aus Kunststoff gefertigt sein. Gleiches gilt für eine Lagerbuchse 4.1, die in der Lageröffnung O1 für die Lagerung des zweiten Lagerabschnitts 23a des Verbindungselements 2a an dem Lagerteil L1 vorgesehen ist (vergleiche hierzu insbesondere die Figuren 3 und 8A-8B).

Zur axialen Sicherung des Verbindungselements 2a an dem Lagerteil L1 ist ein Sicherungsbolzen 3 vorgesehen (vergleiche hierzu erneut insbesondere die Figuren 2, 3 und 8A bis 8B). Der Sicherungsbolzen 3 für die axiale Sicherung des Verbindungselements 2a an dem Lagerteil L1 dient hierbei gleichzeitig der axialen Sicherung der Verbindungswelle W. Hierfür ist der Sicherungsbolzen 3 über einen Gewindeabschnitt 30 in ein Innengewinde der Verbindungswelle W eingedreht. An einer Außenseite des Lagerteils L1 liegt der Sicherungsbolzen 3 dann mit einem flächigen Kopf 31 vor, dessen Durchmesser den Durchmesser der Durchgangsöffnung O1 übersteigt.

Über das Verbindungselement 2a, das drehfest mit einem Ende der Verbindungswelle W verbunden und einer Längsseite der Durchlade D (in der Figur 1 der linken Längsseite) zugeordnet ist, ist die Durchlade D an ihrer ersten sitzunterbauseitigen Lagerstelle DL1 an dem sitzunterbaufesten Lagerteil L1 exzentrisch gelagert, um die Taumelbewegung der Rückenlehne R nachzuvollziehen, wenn die Durchlade D gemeinsam mit der Rückenlehne R relativ zu dem Sitzunterbau S geschwenkt wird (beispielsweise indem die Rückenlehne R und die Durchlade D hierfür miteinander verriegelt sind). Darüber hinaus ist die Durchlade D an dieser ersten Lagerstelle DL1 auch relativ zu dem Verbindungselement 2a um die Lehnenschwenkachse A schwenkbar, wenn die Durchlade D relativ zu der Rückenlehne R geschwenkt werden soll.

An ihrer anderen, lehnenseitigen Lagerstelle DL2 ist die Durchlade D über ein weiteres, zweites hülsenförmiges Verbindungselement 2b mit dem Drehbeschlag DB1 der Rückenlehne R gekoppelt und gleichzeitig relativ zu diesem Verbindungselement 2b schwenkbar gehalten. Das weitere Verbindungselement 2b ist hierbei entsprechend der Schnittdarstellung der Figur 2 drehfest mit dem Außenrad AR des Drehbeschlags DB1 gekoppelt. Das zweite Verbindungselement 2b führt somit bei einer Schwenkbewegung der Rückenlehne R ebenfalls die Taumelbewegung aus.

An einem Hülsenabschnitt 22b dieses Verbindungselements 2b, durch den hindurch sich die Verbindungswelle W erstreckt, ist eine der anderen (rechten) Längsseite der Durchlade D zugeordnetes Adapterblech 1b gehalten. Über eine (Abstands-) Buchse BS und eine auf ein Außengewinde eines Gewindeabschnitts 25b des Verbindungselements 2b aufgeschraubte Sicherungsmutter 5 ist dabei dieses Adapterblech 1b an dem Verbindungselement 2b axial gesichert. Hierbei ist in einer Lageröffnung des Adapterblechs 1b der Hülsenabschnitt 22b des rücklehnenseitigen Verbindungselements 2b derart aufgenommen, dass das Adapterblech 1b an dem Hülsenabschnitt 22b schwenkbar gelagert ist. An der zweiten Lagerstelle DL2 ist die Durchlade D folglich einerseits an dem Verbindungselement 2b um die Längsachse des Verbindungselements 2b und die damit zusammenfallende Lehnenschwenkachse A relativ zu der Rückenlehne R schwenkbar, gleichzeitig führt die Durchlade D bei einem Verschwenken zusammen mit der Rückenlehne R auch an der Lagerstelle DL2 die Taumelbewegung mit aus, sodass es zu keiner Relativbewegung zwischen Rückenlehne R und Durchlade D kommt.

In der dargestellten Ausführungsvariante ist somit die Durchlade D einerseits eigenständig und damit unabhängig von der Rückenlehne R klappbar. Darüber hinaus ist die Durchlade D einerseits an dem Sitzunterbau S über das eine (erste) Verbindungselement 2a taumelnd gelagert und andererseits über das weitere (zweite) Verbindungselement 2b an der Rückenlehne R und deren Drehbeschlag DB1 gelagert. Derart kann die Durchlade D an beiden Lagerstellen DL1 und DL2 eine Taumelbewegung der Lehnenschwenkachse A nachvollziehen, wenn die Rückenlehne R zusammen mit der Durchlade D relativ zu dem Sitzunterbau S geschwenkt und beispielsweise in ihrer Neigung verändert oder nach vorne in eine Ladeposition geklappt wird.

Die mit der Durchlade D nachvollzogene Taumelbewegung der Rückenlehne R ist hierbei insbesondere anhand der Figuren 4-4A, 5-5A, 6-6A, 7-7A und 8A-8B illustriert. So ist beispielsweise aus den vergrößerten Darstellungen der Figuren 4A und 5A ersichtlich, wie die Lehnenschwenkachse A bezüglich der sitzunterbaufesten Lagerachse B wandert, wenn die Rückenlehne R zusammen mit der Durchlade D ausgehend von einer in der Figur 4 dargestellten Ruhelage um einen definierten Schwenkwinkel - vorliegend zum Beispiel im Bereich von 5°-10°- nach vorne geschenkt wird. Hierbei verändert sich auch die Position des Außenrades AR bezüglich des sitzunterbauteilfesten Lagerteils L2.

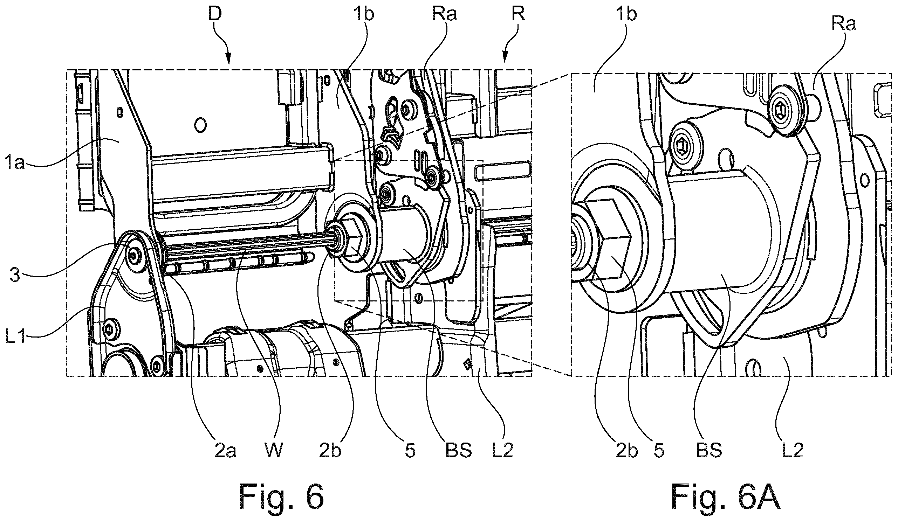

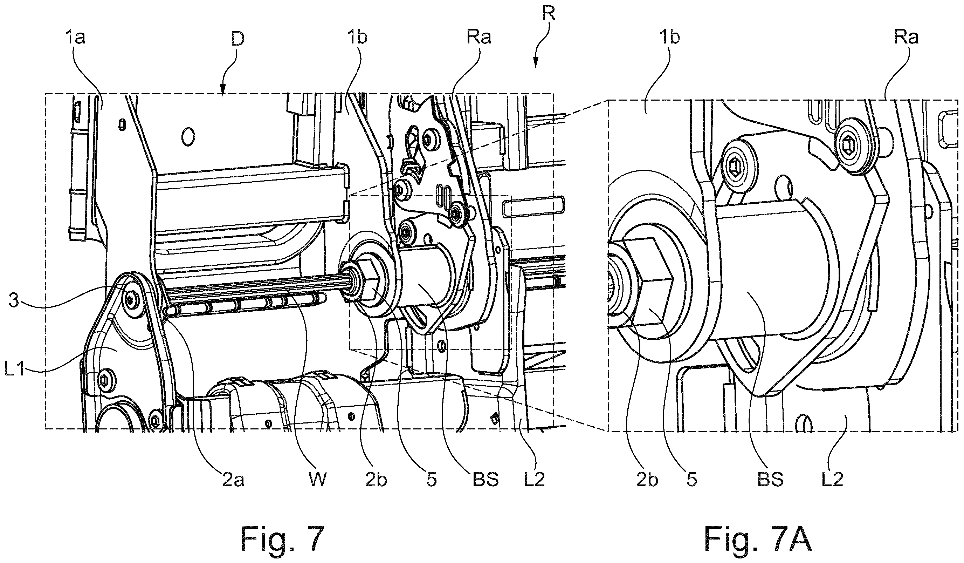

Diese Änderung der Relativlage rückenlehnenfester und durchladefester Komponenten bezüglich des sitzunterbaufesten Lagerteils L2 ist auch anhand der Figuren 6A und 7A ersichtlich. Hier zeigen die Figur 6A ebenfalls die Ruhelage und die Figur 7A die nach vorne geschwenkte Stellung. Aus dem Vergleich der Figuren 4 und 5 sowie 6 und 7 ist auch die Taumelbewegung im Bereich der ersten Lagerstelle DL1 der Durchlade D an dem Lagerteil L1 anhand der sich verändernden Position des Sicherungsbolzens 3 ersichtlich. Dies ist in vergrößertem Maßstab ebenfalls mit Blick auf die Innenseite des Lagerteils L1 in den Figuren 8A und 8B veranschaulicht, wobei die Figur 8A erneut die Ruhelage und die Figur 8B die nach vorne geschwenkte Stellung zeigen.

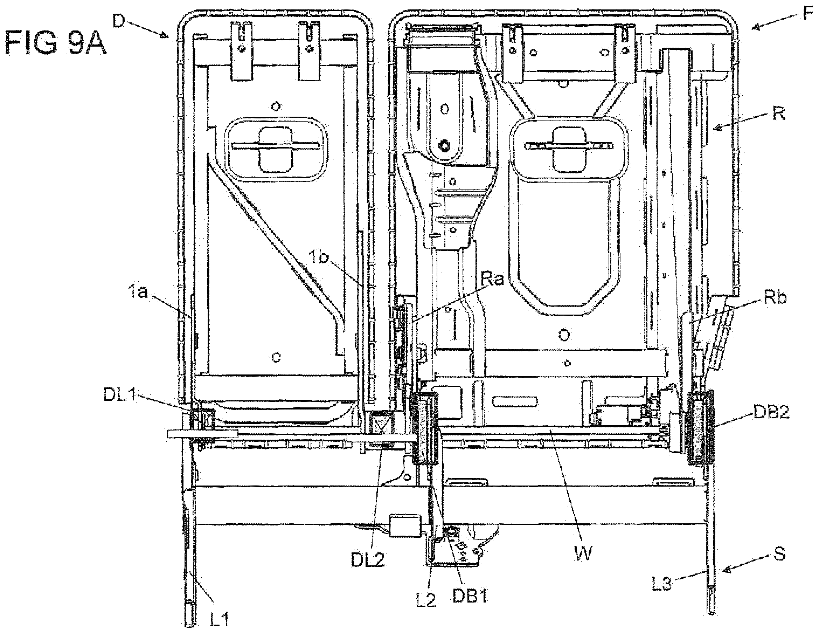

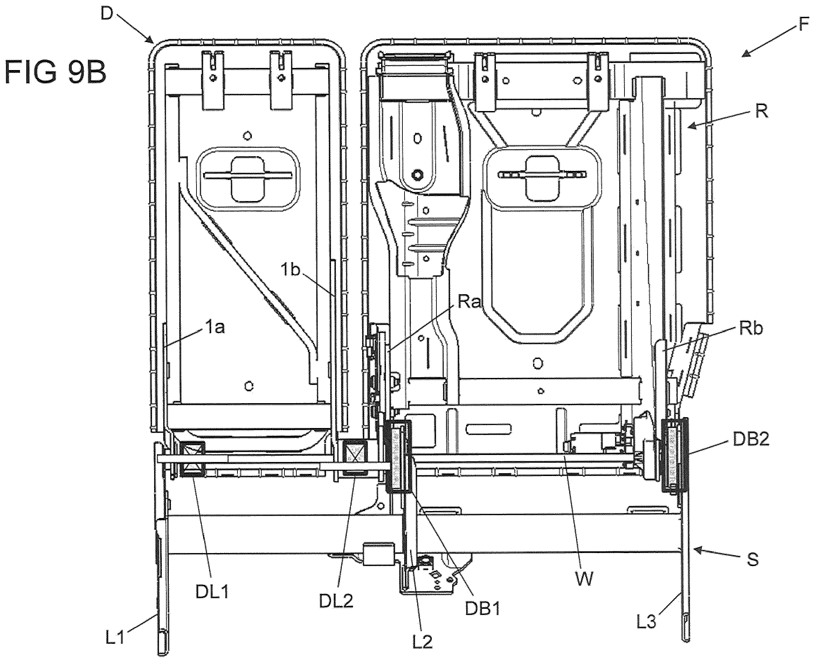

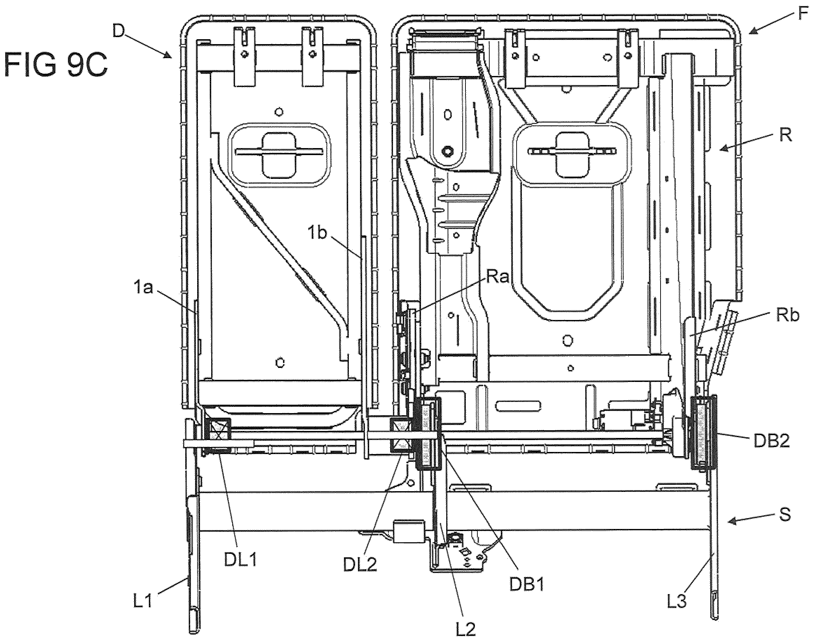

Während bei der Ausführungsvariante der Figuren 1 bis 8B die Durchlade S an ihren ersten und zweiten Lagerstellen DL1 und DL2 jeweils taumelnd gelagert ist, ist dies im Rahmen der vorgeschlagenen Lösung nicht zwingend. So kann es aufgrund der vergleichsweise geringfügigen Taumelbewegung der Lehnenschwenkachse A auch ausreichen, dass lediglich an einer der Lagerstellen DL1 und DL2 der Durchlade D eine Taumelbewegung nachvollzogen werden kann. Diese Möglichkeit ist anhand der Figuren 9A, 9B und 9C näher veranschaulicht.

Während die Figur 9A für den Fahrzeugsitz F der Figuren 1 bis 8B nochmals schematisch die Taumellagerung an beiden ersten und zweiten Lagerstellen DL1 und DL2 der Durchlade D veranschaulicht, sehen die Ausführungsvarianten der Figuren 9B und 9C eine taumelnde Lagerung jeweils nur an einer dieser Lagerstellen DL1 und DL2 vor. Bei der Ausführungsvariante der Figur 9B ist beispielsweise lediglich die dem Drehbeschlag DB1 zugeordnete und mithin lehnenseitige Lagerstelle DL2 der Durchlade D taumelnd ausgeführt.

Bei der Ausführungsvariante der Figur 9C ist wiederum lediglich die sitzunterbauseitige erste Lagerstelle DL1 der Durchlade D taumelnd ausgeführt, während die zweite d.h., in dieser Variante lediglich der Rückenlehne R zugeordnete und näher zu der Rückenlehne R angeordnete (rückenlehnennahe) Lagerstelle DL2 nicht taumelnd ausgeführt ist. Die nicht taumelnd ausgeführte zweite Lagerstelle DL2 für die Durchlade D befindet sich in der Ausführungsvariante der Figur 9C dementsprechend am Sitzunterbau S, z.B. dem sitzunterbaufesten (mittleren) Lagerteil L2.

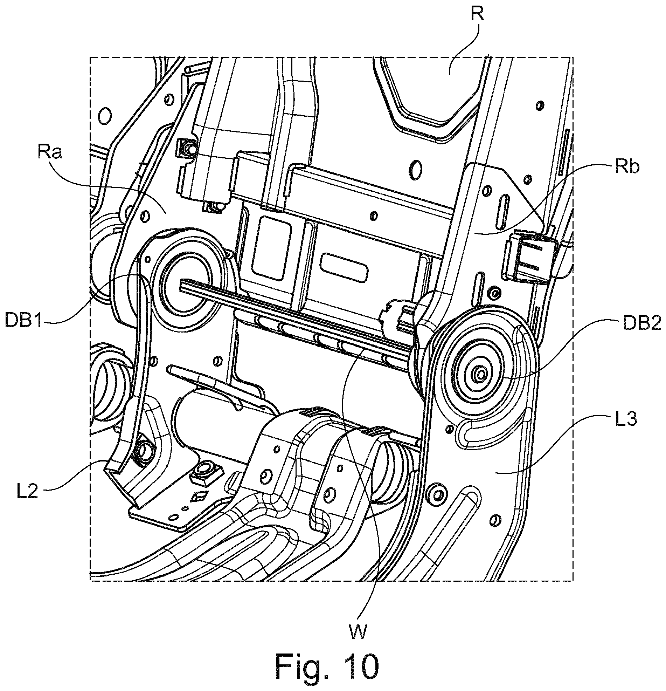

In der perspektivischen Ansicht der Figur 10 ist ferner die insbesondere auch bereits aus der Figur 1 ersichtliche Lagerung der Rückenlehne R an dem Sitzunterbau S über die Drehbeschläge DB1 und DB2 veranschaulicht, die in der dargestellten Ausführungsvariante - entgegen dem in der Praxis üblichen Vorgehen - nicht um 180° zueinander gedreht angeordnet sind. So ist der erste im Bereich der Durchlade D vorgesehene (linke) Drehbeschlag DB2 identisch zu dem zweiten, türseitigen und damit in der Figur 10 rechts liegenden Drehbeschlag DB2 ausgebildet, jedoch nicht gedreht verbaut. Derart ist der erste Drehbeschlag DB1 außenseitig mit dem Lehnenadapter Ra und innenseitig mit dem sitzunterbauseitigen Lagerteil L2 verbunden. Der äußere, rechts liegende Drehbeschlag DB2 ist demgegenüber innenseitig mit dem Lehnenadapter Rb und außenseitig mit dem sitzunterbauseitigen Lagerteil L3 verbunden. Von der Durchlade D entlang der Verbindungswelle W gesehen folgen somit bei der dargestellten Ausführungsvariante aufgrund der Anordnung der Drehbeschläge DB1 und DB2 ein erster Lehnenadapter Ra und ein (erstes) Lagerteil L2 der einen Lehnenlängsseite sowie ein Lehnenadapter Rb und ein (zweites) Lagerteil L3 der anderen Lehnenlängsseite aufeinander. Die Anordnung des ersten Drehbeschlags DB1 hat hierbei insbesondere den Vorteil, dass direkt das zweite hülsenförmige und damit als Lagerbolzen dienende Verbindungselement 2b auf den Drehbeschlag DB1 (hier dessen Außenrad AR) geschweißt und die Durchlade D hierauf gelagert werden kann. Zusätzliche Abstützteile für die Durchlade D sind auf diese Weise nicht nötig, um den auftretenden Belastungen dauerhaft standzuhalten.

### Bezugszeichenliste

- 1a, 1b: Adapterblech (Adapterteil)
- 12a: Lageröffnung
- 2a, 2b: Verbindungselement
- 20a: Wellenöffnung
- 21a: 1. Lagerabschnitt
- 22b: Hülsenabschnitt
- 23a: 2. Lagerabschnitt
- 25b: Gewindeabschnitt
- 3: Sicherungsbolzen
- 30: Gewindeabschnitt
- 31: Kopf
- 4.1,4.2: Lagerbuchse
- 5: Sicherungsmutter
- A: Lehnenschwenkachse
- AR: Außenrad
- B: Sitzunterbaufeste Lagerachse
- BS: Buchse
- D: Durchlade
- DB1, DB2: Drehbeschlag (Beschlaganordnung)
- DL1, DL2: Lagerstelle
- F: Fahrzeugsitz
- IR: Innenrad
- L1, L2, L3: Lagerteil
- O1: Lageröffnung
- R: Rückenlehne
- Ra, Rb: Lehnenadapter
- S: Sitzunterbau
- W: Verbindungswelle

## Patentansprüche

1. Fahrzeugsitz, mit
- einem Sitzunterbau (S), an dem eine Rückenlehne (R) schwenkbar gelagert ist, und
- einem Lehnenelement (D), das zusammen mit der Rückenlehne (R) schwenkbar ist und das relativ zu der Rückenlehne (R) schwenkbar ist,
wobei die Rückenlehne (R) über mindestens eine Beschlaganordnung (DB1, DB2) an dem Sitzunterbau (S) derart schwenkbar gelagert ist, dass eine Schwenkbewegung der Rückenlehne (R) bezüglich des Sitzunterbaus (S) um eine eine Taumelbewegung ausführende Lehnenschwenkachse (A) erfolgt, und
wobei das Lehnenelement (D) an einer ersten Lagerstelle (DL1) an dem Sitzunterbau (S) gelagert ist und an einer zweiten Lagerstelle (DL2) an der Rückenlehne (R) gelagert ist und an der ersten Lagerstelle (DL1) für die Lagerung des Lehnenelements (D) ein erstes bei einer Schwenkbewegung der Rückenlehne die Taumelbewegung nachvollziehendes Verbindungselement (2a) vorgesehen ist und an der zweiten Lagerstelle (DL2) ein zweites bei einer Schwenkbewegung der Rückenlehne die Taumelbewegung nachvollziehendes Verbindungselement (2b) vorgesehen ist,
**dadurch gekennzeichnet, dass**
das erste Verbindungselement (2a) an der ersten Lagerstellte (DL1) an einer sitzunterbaufesten Komponente (L1) exzentrisch gelagert ist und das zweite Verbindungselement (2b) an der zweiten Lagerstelle (DL2) drehfest mit der Rückenlehne (R) gekoppelt ist.

2. Fahrzeugsitz nach Anspruch 1, **dadurch gekennzeichnet, dass** das Lehnenelement (D) an der ersten Lagerstelle (DL1) über das erste Verbindungselement (2a) an der sitzunterbaufesten Komponente (L1) exzentrisch gelagert ist, um die Taumelbewegung der Rückenlehne (R) nachzuvollziehen, wenn das Lehnenelement (D) gemeinsam mit der Rückenlehne (R) relativ zu dem Sitzunterbau (S) geschwenkt wird, und relativ zu dem ersten Verbindungselement (2a) schwenkbar ist, wenn des Lehnenelement (D) relativ zu der Rückenlehne (R) geschwenkt wird.

3. Fahrzeugsitz nach Anspruch 1, **dadurch gekennzeichnet, dass** das Lehnenelement (D) an der zweiten Lagerstelle (DL2) über das zweite Verbindungselement (2b) mit der mindestens einen Beschlaganordnung (DB1) der Rückenlehne (R) gekoppelt ist, um die Taumelbewegung der Rückenlehne (R) nachzuvollziehen, wenn das Lehnenelement (D) gemeinsam mit der Rückenlehne (R) relativ zu dem Sitzunterbau (S) geschwenkt wird und relativ zu dem zweiten Verbindungselement (2b) schwenkbar ist, wenn des Lehnenelement (D) relativ zu der Rückenlehne (R) geschwenkt wird.

4. Fahrzeugsitz nach einem der vorhergehenden Ansprüche, **dadurch gekennzeichnet, dass** das erste und zweite Verbindungselement (2a, 2b) jeweils eine Schwenkachse definieren, um die das Lehnenelement (D) relativ zu der Rückenlehne (R) schwenkbar ist.

5. Fahrzeugsitz nach Anspruch 4, **dadurch gekennzeichnet, dass** die von dem ersten oder zweiten Verbindungselement (2a, 2b) definierte Schwenkachse koaxial zu der Lehnenschwenkachse (A) verläuft.

6. Fahrzeugsitz nach Anspruch 4 oder 5, **dadurch gekennzeichnet, dass** das erste Verbindungselement (2a) über einen ersten Lagerabschnitt (21a) die Schwenkachse für das Lehnenelement (D) definiert und über einen zweiten Lagerabschnitt (23a) an der sitzunterbaufesten Komponente (L1) exzentrisch gelagert ist.

7. Fahrzeugsitz nach einem der vorhergehenden Ansprüche, **dadurch gekennzeichnet, dass** das erste Verbindungselement (2a) drehfest mit einer Verbindungswelle (W) verbunden ist, die bei einer Schwenkbewegung der Rückenlehne (R) um ihre Wellenlängsachse gedreht wird.

8. Fahrzeugsitz nach Anspruch 7, **dadurch gekennzeichnet, dass** die Rückenlehne (R) über zwei räumlich zueinander beabstandete Beschlagsanordnungen (DB1, DB2) an dem Sitzunterbau (S) schwenkbar gelagert ist und die Verbindungswelle (W) die beiden Beschlagsanordnungen (DB1, DB2) drehmomentübertragend miteinander koppelt.

9. Fahrzeugsitz nach Anspruch 7 oder 8, **dadurch gekennzeichnet, dass** sich die Verbindungswelle (W) durch eine Beschlagsanordnung (DB1) hindurch zu der ersten Lagerstelle (DL1) erstreckt, an der das Lehnenelement (D) an dem Sitzunterbau (S) gelagert ist.

10. Fahrzeugsitz nach einem der Ansprüche 3 bis 5, **dadurch gekennzeichnet, dass** sich durch das drehfest mit der Rückenlehne (R) gekoppelte zweite Verbindungselement (2b) eine Verbindungswelle (W) hindurch erstreckt, mit der das zweite Verbindungselement (2b) nicht drehfest verbunden ist, wobei insbesondere das zweite Verbindungselement (2b) einen hülsenförmigen Abschnitt (22b) aufweist, durch den sich die Verbindungswelle (W) hindurch erstreckt.

11. Fahrzeugsitz nach einem der vorhergehenden Ansprüche, **dadurch gekennzeichnet, dass** durch den Sitzunterbau (S) eine Lagerachse (B) definiert ist, relativ zu der die Lehnenschwenkachse (A) eine Taumelbewegung ausführt, wenn die Rückenlehne (R) geschwenkt wird.

12. Fahrzeugsitz nach einem der vorhergehenden Ansprüche, **dadurch gekennzeichnet, dass** das Lehnenelement eine Durchlade (D) umfasst.

13. Fahrzeugsitz nach einem der vorhergehenden Ansprüche, **dadurch gekennzeichnet, dass** die Rückenlehne (R) manuell und/oder fremdkraftbetätigt verstellbar ist.

14. Fahrzeugsitz nach einem der vorhergehenden Ansprüche, **dadurch gekennzeichnet, dass** die Rückenlehne (R) über zwei identisch ausgebildete, aber nicht um 180° zueinander gedreht angeordnete Beschlaganordnungen (DB1, DB2) an dem Sitzunterbau (S) schwenkbar gelagert ist.

15. Fahrzeugsitz nach einem der vorhergehenden Ansprüche, **dadurch gekennzeichnet, dass** die Rückenlehne (R) über zwei Beschlaganordnungen (DB1, DB2) an dem Sitzunterbau (S) schwenkbar gelagert ist, von denen eine erste Beschlaganordnung (DB1) außenseitig mit einem ersten rückenlehnenseitigen Lehnenadapter (Ra) und innenseitig mit einem ersten sitzunterbauseitigen Lagerteil (L2) verbunden ist und eine zweite Beschlaganordnung (DB2) außenseitig mit einem zweiten sitzunterbauseitigen Lagerteil (L3) und innenseitig mit einem zweiten rückenlehnenseitigen Lehnenadapter (Rb) verbunden ist.

## Claims

1. A vehicle seat, comprising
- a seat substructure (S), on which a backrest (R) is pivotally mounted, and
- a backrest element (D), which is pivotable together with the backrest (R) and which is pivotable relative to the backrest (R),
wherein the backrest (R) is pivotally mounted on the seat substructure (S) via at least one fitting arrangement (DB1, DB2) in such a way that a pivotal movement of the backrest (R) with respect to the seat substructure (S) is effected about a backrest pivot axis carrying out a wobbling movement, and
wherein the backrest element (D) is mounted on the seat substructure (S) at a first bearing point (DL1) and is mounted on the backrest (R) at a second bearing point (DL2), and at the first bearing point (DL1) for mounting the backrest element (D) there is provided a first connecting element (2a) reproducing the wobbling movement during a pivotal movement of the backrest, and at the second bearing point (DL2) there is provided a second connecting element (2b) reproducing a wobbling movement during a pivotal movement of the backrest,
**characterized in that**
the first connecting element (2a) is eccentrically mounted on a component (L1) attached to the seat substructure at the first bearing point (DL1) and the second connecting element (2b) is non-rotatably coupled to the backrest (R) at the second bearing point (DL2).

2. The vehicle seat according to claim 1, **characterized in that** at the first bearing point (DL1) the backrest element (D) is eccentrically mounted on the component (L1) attached to the seat substructure via the first connecting element (2a) in order to reproduce the wobbling movement of the backrest (R) when the backrest element (D) is pivoted relative to the seat substructure (S) together with the backrest (R), and is pivotable relative to the first connecting element (2a) when the backrest element (D) is pivoted relative to the backrest (R).

3. The vehicle seat according to claim 1, **characterized in that** at the second bearing point (DL2) the backrest element (D) is coupled to the at least one fitting arrangement (DB1) of the backrest (R) via the second connecting element (2b) in order to reproduce the wobbling movement of the backrest (R) when the backrest element (D) is pivoted relative to the seat substructure (S) together with the backrest (R), and is pivotable relative to the second connecting element (2b) when the backrest element (D) is pivoted relative to the backrest (R).

4. The vehicle seat according to any of the preceding claims, **characterized in that** the first and second connecting elements (2a, 2b) each define a pivot axis about which the backrest element (D) is pivotable relative to the backrest (R).

5. The vehicle seat according to claim 4, **characterized in that** the pivot axis defined by the first or second connecting element (2a, 2b) extends coaxially to the backrest pivot axis (A).

6. The vehicle seat according to claim 4 or 5, **characterized in that** the first connecting element (2a) defines the pivot axis for the backrest element (D) via a first bearing portion (21a) and is eccentrically mounted on the component (L1) attached to the seat substructure via a second bearing portion (23a).

7. The vehicle seat according to any of the preceding claims, **characterized in that** the first connecting element (2a) is non-rotatably connected to a connecting shaft (W) which during a pivotal movement of the backrest (R) is rotated about its longitudinal shaft axis.

8. The vehicle seat according to claim 7, **characterized in that** the backrest (R) is pivotally mounted on the seat substructure (S) via two fitting arrangements (DB1, DB2) spaced apart from each other and the connecting shaft (W) couples the two fitting arrangements (DB1, DB2) to each other in a torque-transmitting manner.

9. The vehicle seat according to claim 7 or 8, **characterized in that** the connecting shaft (W) extends through a fitting arrangement (DB1) to the first bearing point (DL1) at which the backrest element (D) is mounted on the seat substructure (S).

10. The vehicle seat according to any of claims 3 to 5, **characterized in that** through the second connecting element (2b) non-rotatably coupled to the backrest (R) a connecting shaft (W) extends, to which the second connecting element (2b) is non-rotatably connected, wherein in particular the second connecting element (2b) has a sleeve-shaped portion (22b) through which the connecting shaft (W) extends.

11. The vehicle seat according to any of the preceding claims, **characterized in that** through the seat substructure (S) a bearing axis (B) is defined, relative to which the backrest pivot axis (A) carries out a wobbling movement when the backrest (R) is pivoted.

12. The vehicle seat according to any of the preceding claims, **characterized in that** the backrest element comprises a load-through (D).

13. The vehicle seat according to any of the preceding claims, **characterized in that** the backrest (R) can be adjusted manually and/or in a power-operated way.

14. The vehicle seat according to any of the preceding claims, **characterized in that** the backrest (R) is pivotally mounted on the seat substructure (S) via two fitting arrangements (DB1, DB2) which are formed identically, but are not rotated relative to each other by 180°.

15. The vehicle seat according to any of the preceding claims, **characterized in that** the backrest (R) is pivotally mounted on the seat substructure (S) via two fitting arrangements (DB1, DB2), of which a first fitting arrangement (DB1) is connected to a first backrest-side backrest adapter (Ra) on its outside and to a first seat substructure-side bearing part (L2) on its inside, and a second fitting arrangement (DB2) is connected to a second seat substructure-side bearing part (L3) on its outside and to a second backrest-side backrest adapter (Rb) on its inside.

## Revendications

1. Siège de véhicule, comportant
- une substructure de siège (S), sur laquelle un dossier (R) est monté de manière pivotante, et
- un élément de dossier (D) qui peut pivoter conjointement avec le dossier (R) et qui peut pivoter par rapport au dossier (R),
le dossier (R) étant monté de manière pivotante sur la substructure de siège (S) par l'intermédiaire d'au moins un ensemble ferrure (DB1, DB2) de telle sorte qu'un mouvement de pivotement du dossier (R) par rapport à la substructure de siège (S) s'effectue autour d'un axe de pivotement de dossier (A) exécutant un mouvement de nutation, et
l'élément de dossier (D) étant monté sur la substructure de siège (S) à un premier point d'appui (DL1) et sur le dossier (R) à un deuxième point d'appui (DL2), et un premier élément de liaison (2a) reproduisant le mouvement de nutation lors d'un mouvement de pivotement étant prévu sur le premier point d'appui (DL1) pour le montage de l'élément de dossier (D) et un deuxième élément de liaison (2b) reproduisant le mouvement de nutation lors d'un mouvement de pivotement du dossier étant prévu au niveau du deuxième point d'appui (DL2),
**caractérisé en ce que**
le premier élément de liaison (2a) est monté de manière excentrée au niveau du premier point d'appui (DL1) sur un composant (L1) solidaire de la substructure de siège et le deuxième élément de liaison (2b) est couplé de manière solidaire en rotation au dossier (R) au niveau du deuxième point d'appui (DL2).

2. Siège de véhicule selon la revendication 1, **caractérisé en ce que** l'élément de dossier (D) est monté de manière excentrée sur le composant (L1) fixé à la substructure de siège au premier point d'appui (DL1) par l'intermédiaire du premier élément de liaison (2a), afin de reproduire le mouvement de nutation du dossier (R), lorsque l'élément de dossier (D) est pivoté conjointement avec le dossier (R) par rapport à la substructure de siège (S), et peut pivoter par rapport au premier élément de liaison (2a) lorsque l'élément de dossier (D) est pivoté par rapport au dossier (R).

3. Siège de véhicule selon la revendication 1, **caractérisé en ce que** l'élément de dossier (D) est couplé à l'au moins un ensemble ferrure (DB1) du dossier (R) au deuxième point d'appui (DL2) par l'intermédiaire du deuxième élément de liaison (2b), afin de reproduire le mouvement de nutation du dossier (R), lorsque l'élément de dossier (D) est pivoté conjointement avec le dossier (R) par rapport à la substructure de siège (S) et peut pivoter par rapport à deuxième l'élément de liaison (2b) lorsque l'élément de dossier (D) est pivoté par rapport au dossier (R).

4. Siège de véhicule selon l'une quelconque des revendications précédentes, **caractérisé en ce que** les premier et deuxième éléments de liaison (2a, 2b) définissent chacun un axe de pivotement autour duquel l'élément de dossier (D) peut pivoter par rapport au dossier (R).

5. Siège de véhicule selon la revendication 4, **caractérisé en ce que** l'axe de pivotement défini par le premier ou le deuxième élément de liaison (2a, 2b) est coaxial à l'axe de pivotement (A) du dossier.

6. Siège de véhicule selon la revendication 4 ou 5, **caractérisé en ce que** le premier élément de liaison (2a) définit l'axe de pivotement pour l'élément de dossier (D) par l'intermédiaire d'un premier tronçon de palier (21a) et est monté de manière excentrée sur le composant (L1) fixé à la substructure de siège par l'intermédiaire d'un deuxième tronçon de palier (23a).

7. Siège de véhicule selon l'une quelconque des revendications précédentes, **caractérisé en ce que** le premier élément de liaison (2a) est solidaire en rotation d'un arbre de liaison (W) qui est mis en rotation autour de son axe longitudinal d'arbre lors d'un mouvement de pivotement du dossier (R).

8. Siège de véhicule selon la revendication 7, **caractérisé en ce que** le dossier (R) est monté pivotant sur la substructure de siège (S) par l'intermédiaire de deux ensembles ferrure (DB1, DB2) espacés l'un de l'autre et **en ce que** l'arbre de liaison (W) couple les deux ensembles ferrure (DB1, DB2) l'un à l'autre en transmettant le couple.

9. Siège de véhicule selon la revendication 7 ou 8, **caractérisé en ce que** l'arbre de liaison (W) s'étend à travers un ensemble ferrure (DB1) jusqu'au premier point d'appui (DL1 ) au niveau duquel l'élément de dossier (D) est monté sur la substructure de siège (S).

10. Siège de véhicule selon l'une quelconque des revendications 3 à 5, **caractérisé en ce que** le deuxième élément de liaison (2b) couplé solidairement en rotation au dossier (R) est traversé par un arbre de liaison (W) avec lequel le deuxième élément de liaison (2b) n'est pas relié solidairement en rotation, le deuxième élément de liaison (2b) présentant notamment un tronçon (22b) en forme de douille traversée par l'arbre de liaison (W).

11. Siège de véhicule selon l'une quelconque des revendications précédentes, **caractérisé en ce qu'**un axe de palier (B) est défini par la substructure de siège (S), par rapport auquel l'axe de pivotement du dossier (A) exécute un mouvement de nutation lorsque le dossier (R) est pivoté.

12. Siège de véhicule selon l'une quelconque des revendications précédentes, **caractérisé en ce que** l'élément de dossier comprend une trappe (D).

13. Siège de véhicule selon l'une quelconque des revendications précédentes, **caractérisé en ce que** le dossier (R) est ajustable manuellement et/ou par une force extérieure.

14. Siège de véhicule selon l'une quelconque des revendications précédentes, **caractérisé en ce que** le dossier (R) est monté pivotant sur la substructure de siège (S) par l'intermédiaire de deux ensembles ferrure (DB1, DB2) de configuration identique, mais non tournés de 180° l'un par rapport à l'autre.

15. Siège de véhicule selon l'une quelconque des revendications précédentes, **caractérisé en ce que** le dossier (R) est monté pivotant sur la substructure de siège (S) par l'intermédiaire de deux ensembles ferrure (DB1, DB2), dont un premier ensemble ferrure (DB1) est relié, côté extérieur, à un premier adaptateur de dossier (Ra) côté dossier et, côté intérieur, à une première partie de palier (L2) côté substructure de siège, et un deuxième ensemble ferrure (DB2) est relié, côté extérieur, à une deuxième partie de palier (L3) côté substructure de siège et, côté intérieur, à un deuxième adaptateur de dossier (Rb) côté dossier.
